(19) **Europäisches Patentamt / European Patent Office / Office européen des brevets**

(11) **EP 2 737 468 B1**

(12) **FASCICULE DE BREVET EUROPEEN**

(45) Date de publication et mention de la délivrance du brevet:
**19.06.2019 Bulletin 2019/25**

(21) Numéro de dépôt: **11771216.6**

(22) Date de dépôt: **28.07.2011**

(51) Int Cl.:
***G08G 5/04*** (2006.01)

(86) Numéro de dépôt international:
**PCT/FR2011/051827**

(87) Numéro de publication internationale:
**WO 2013/014338 (31.01.2013 Gazette 2013/05)**

(54) **PROCÉDÉ ET DISPOSITIF POUR EMPÊCHER L'ÉMISSION D'ALERTES PAR LE SYSTÈME ANTICOLLISION D'UN AVION, LORS D'UNE MANOEUVRE DE CHANGEMENT D'ALTITUDE**

VERFAHREN UND VORRICHTUNG ZUR VERHÜTUNG DER ÜBERTRAGUNG VON ALARMEN DURCH DAS KOLLISIONSVERMEIDUNGSSYSTEM EINES FLUGZEUGS WÄHREND EINES MANÖVERS ZUR HÖHENEINSTELLUNG

METHOD AND DEVICE FOR PREVENTING THE TRANSMISSION OF ALARMS BY THE COLLISION AVOIDANCE SYSTEM OF AN AIRCRAFT DURING A MANOEUVRE FOR ADJUSTING ALTITUDE

(84) Etats contractants désignés:
**AL AT BE BG CH CY CZ DE DK EE ES FI GB GR HR HU IE IS IT LI LT LU LV MC MK MT NL NO PL PT RO RS SE SI SK SM TR**

(43) Date de publication de la demande:
**04.06.2014 Bulletin 2014/23**

(73) Titulaire: **Airbus Operations (S.A.S.)**
**31060 Toulouse (FR)**

(72) Inventeurs:
• **BOTARGUES, Paule**
**F-31000 Toulouse (FR)**
• **DAL SANTO, Xavier**
**F-31700 Blagnac (FR)**
• **SAPIN, Olivier**
**F-31000 Toulouse (FR)**
• **BOMPART, Vincent**
**F-31300 Toulouse (FR)**

(74) Mandataire: **Gevers & Orès**
**41 avenue de Friedland**
**75008 Paris (FR)**

(56) Documents cités:
| | |
|---|---|
| EP-A1- 1 240 636 | EP-A1- 1 630 766 |
| EP-A2- 2 113 897 | FR-A1- 2 876 483 |
| FR-A1- 2 936 343 | FR-A1- 2 955 960 |

**Description**

La présente invention concerne un procédé et un dispositif pour empêcher l'émission d'au moins certaines alertes par un système anticollision monté à bord d'un avion, lors d'une manoeuvre de changement d'altitude, ainsi qu'un avion pourvu d'un tel dispositif.

On sait que la plupart des avions de ligne sont équipés de systèmes anticollision (généralement appelés systèmes TCAS pour Traffic Collision Avoidance Systems) qui permettent d'assurer la sécurité du trafic aérien en prévenant les risques de collision en vol.

Ainsi, lorsque deux avions convergent l'un vers l'autre, leurs systèmes anticollision calculent une estimation du temps de collision et émettent une alerte informant les équipages de chaque avion d'une possible future collision : une telle alerte est généralement appelée «avis de trafic» ou «alerte TA» de premier type. Le cas échéant, lesdits systèmes anticollision émettent de plus, à l'attention de l'équipage, un ordre de manoeuvre d'évitement dans le plan vertical afin de sortir de la situation de possibilité de collision : un tel ordre de manoeuvre d'évitement est généralement appelé «avis de résolution» ou «alerte RA» de second type. Les alertes de premier type TA et de second type RA sont matérialisées par des messages vocaux et par l'affichage d'informations dans les cabines de pilotage.

En pratique, un système anticollision embarqué calcule un temps de collision dans le plan horizontal (rapport entre la distance horizontale séparant deux avions et leur vitesse horizontale relative) et un temps de collision dans le plan vertical (rapport entre la hauteur verticale des deux avions et leur vitesse verticale relative). Lesdits temps de collision ainsi calculés sont comparés à des seuils d'alerte pour les alertes TA et pour les alertes RA (lesdits seuils d'alertes étant fonction de l'altitude de l'avion le plus haut) et les alertes sont déclenchées lorsque les temps de collision calculés sont inférieurs aux seuils d'alerte correspondants.

Par ailleurs, on sait qu'il est fréquent qu'un avion doive capturer (en montant ou en descendant) un niveau d'altitude stabilisé (appelé niveau d'altitude de consigne) voisin d'un autre niveau d'altitude attribué à un autre avion et que, selon les règles de navigation aérienne, deux niveaux d'altitude stabilisés voisins ne sont séparés que de 300 m (1000 pieds).

Aussi, à cause de cette faible différence d'altitude entre les niveaux d'altitude stabilisés, de la vitesse verticale élevée des avions modernes et de l'importance du trafic aérien, les systèmes anticollision engendrent de nombreuses alertes TA et RA, alors même qu'un avion, évoluant verticalement pour changer d'altitude, manoeuvre correctement sans risque de collision avec un autre avion. Ces alertes induisent beaucoup de stress pour les pilotes et sont jugées opérationnellement inutiles par ces derniers, puisque la manoeuvre de changement d'altitude est correcte et que la prise en compte de ces alertes conduit dans la plupart des cas à une perturbation du trafic aérien.

De plus, les alertes RA de second type durant les phases de capture d'altitude sont très nombreuses et on estime qu'elles représentent actuellement plus de 50% du total de ces alertes dans l'espace européen, ce pourcentage étant amené à augmenter dans le futur par suite du développement du trafic aérien.

Le document FR2936343 décrit une méthode selon le préambule de la revendication 1.

Aussi, pour pallier ces inconvénients, on a décrit, dans la demande de brevet français FR-08/05211 déposée le 23 septembre 2008 par la Demanderesse, des moyens pour limiter le nombre d'alertes émises par le système anticollision d'un avion. En particulier, de tels moyens sont aptes à adapter une manoeuvre de changement d'altitude par un contrôle de la vitesse verticale de l'avion, de manière à maintenir le temps de collision calculé dans le plan vertical par le système anticollision TCAS au-dessus des seuils de déclenchement des alertes TA et/ou RA.

Cependant, la réduction de la vitesse verticale de l'avion, effectuée lors de l'adaptation d'une manoeuvre de changement d'altitude, conduit à allonger le délai d'exécution de cette dernière et, donc, à augmenter le temps passé par un avion entre deux niveaux d'altitude.

En outre, dans certains cas, une telle réduction de la vitesse verticale peut également précipiter ou provoquer l'émission d'une alerte TA et/ou RA. Ainsi, par exemple, lorsque deux avions sont en phase de montée, lors d'une manoeuvre de changement d'altitude, et sont en convergence l'un vers l'autre, une réduction de la vitesse verticale peut rapprocher les deux avions l'un de l'autre, ce qui entraîne l'émission d'une alerte par le système anticollision.

La présente invention a pour objet de perfectionner les moyens d'adaptation d'une manoeuvre de changement d'altitude précités.

A cette fin, selon l'invention, le procédé pour empêcher l'émission d'au moins certaines alertes par un système anticollision monté à bord d'un avion lors d'une manoeuvre de changement d'altitude comportant une phase de capture d'un niveau d'altitude de consigne, ledit système anticollision étant apte à détecter au moins un aéronef intrus se trouvant dans l'environnement aérien dudit avion, à calculer un temps de collision théorique entre ledit avion et ledit aéronef intrus et à émettre des alertes de premier type et des alertes de second type, lorsque ce temps de collision théorique est inférieur respectivement à un premier seuil et un second seuil, ledit procédé étant susceptible de mettre en oeuvre une étape d'adaptation de ladite manoeuvre de changement d'altitude par un contrôle de la vitesse verticale dudit avion afin d'éviter l'émission d'au moins certaines desdites alertes,

est remarquable en ce que :

A/ on détecte préalablement, lors de ladite manoeuvre de changement d'altitude, l'émission d'une alerte de premier type ;

B/ on détermine ledit premier seuil d'alerte à partir de l'altitude dudit avion à l'instant de l'émission de ladite alerte de premier type et dudit niveau d'altitude de consigne ; et

C/ on établit un seuil de hauteur d'activation à partir dudit premier seuil d'alerte déterminé et de la vitesse verticale dudit avion à l'instant d'émission de ladite alerte de premier type, de sorte que :

- lorsque la hauteur séparant ledit avion dudit niveau d'altitude de consigne, à l'instant d'émission de ladite alerte de premier type, est au plus égale audit seuil de hauteur déterminé, ladite étape d'adaptation est apte à être mise en oeuvre afin d'empêcher l'émission de nouvelles alertes ; et
- lorsque la hauteur séparant ledit avion dudit niveau d'altitude de consigne, à l'instant d'émission de ladite alerte de premier type, est strictement supérieure audit seuil de hauteur, ladite étape d'adaptation de la manoeuvre de changement d'altitude est inhibée.

Ainsi, grâce à l'invention, on restreint l'exécution de l'adaptation d'une manoeuvre de changement d'altitude aux situations de rencontre entre l'avion et un aéronef intrus jugées opportunes, afin de ne pas pénaliser inutilement les autres situations par une réduction anticipée de la vitesse verticale et ainsi, par exemple, précipiter ou provoquer l'émission d'alertes RA. En effet, grâce à l'invention, on peut déterminer si, à partir de l'information d'émission d'une alerte TA, la situation en cours de rencontre de l'avion et d'un aéronef intrus est éligible pour une adaptation de la manoeuvre de changement d'altitude. Le seuil de hauteur d'activation déterminé correspond à la distance maximale, séparant l'avion du niveau d'altitude de consigne, à partir de laquelle une adaptation de la manoeuvre peut être effectuée, par exemple automatiquement, par un contrôle de la vitesse verticale de l'avion en cas d'émission d'une alerte TA, afin notamment d'éviter l'émission d'alertes RA. Dans le cas où une alerte TA survient à une hauteur séparant l'avion du niveau de consigne strictement supérieure au seuil de hauteur, l'adaptation précitée de la manoeuvre est inhibée, de sorte qu'aucune adaptation n'est réalisée, y compris lors du franchissement du seuil de hauteur par l'avion en l'absence d'émission d'une nouvelle alerte TA.

$$ha = S1d.|Vz| + \frac{1}{2}g.|nz|.S1d^2$$

De préférence, ledit seuil de hauteur d'activation est défini par la relation :
dans laquelle :

- ha est ledit seuil de hauteur d'activation déterminé ;
- Vz est la vitesse verticale dudit avion à l'instant de l'émission de ladite alerte de premier type ;
- g.lnzl est l'accélération verticale constante au cours de ladite phase de capture ; et
- S1d est ledit premier seuil d'alerte déterminé lors de l'étape B/.

De préférence, lors de l'étape B/ :

- on détermine l'altitude maximale entre l'altitude dudit avion à l'instant de l'émission de ladite alerte de premier type et ledit niveau d'altitude de consigne ; et
- on associe audit premier seuil d'alerte, en fonction de ladite altitude maximale déterminée, une valeur de seuil d'alerte prédéfinie appartenant à un ensemble prédéfini de valeurs de seuil d'alerte, chacune desdites valeurs étant associée à une altitude donnée.

Avantageusement, ledit ensemble peut comporter des valeurs de référence prédéterminées et des valeurs approximées, obtenues par une approximation linéaire d'au moins certaines desdites valeurs de référence.

La présente invention concerne en outre un dispositif pour empêcher l'émission d'au moins certaines alertes par un système anticollision monté à bord d'un avion lors d'une manoeuvre de changement d'altitude comportant une phase de capture d'un niveau d'altitude de consigne, ledit système anticollision étant apte à détecter au moins un aéronef intrus se trouvant dans l'environnement aérien dudit avion, à calculer un temps de collision théorique entre ledit avion et ledit aéronef intrus et à émettre des alertes de premier type et des alertes de second type, lorsque ce temps de collision théorique est inférieur respectivement à un premier seuil et un second seuil, ledit dispositif comportant des moyens aptes à adapter ladite manoeuvre de changement d'altitude par un contrôle de la vitesse verticale dudit avion afin d'éviter l'émission d'au moins certaines desdites alertes. Selon l'invention, ledit dispositif comporte en outre :

- des moyens pour détecter préalablement, lors de ladite manoeuvre de changement d'altitude, l'émission d'une alerte de premier type ;
- des moyens pour déterminer ledit premier seuil d'alerte à partir de l'altitude dudit avion à l'instant de l'émission de ladite alerte de premier type et dudit niveau d'altitude de consigne ; et

- des moyens pour établir un seuil de hauteur d'activation à partir dudit premier seuil d'alerte déterminé et de la vitesse verticale dudit avion à l'instant de l'émission de ladite alerte de premier type, de sorte que :

  ▪ lorsque la hauteur séparant ledit avion dudit niveau d'altitude de consigne, à l'instant d'émission de ladite alerte de premier type, est au plus égale audit seuil de hauteur déterminé, lesdits moyens d'adaptation sont activés afin d'être aptes à adapter ladite manoeuvre de changement d'altitude ; et
  ▪ lorsque la hauteur séparant ledit avion dudit niveau d'altitude de consigne, à l'instant d'émission de ladite alerte de premier type, est strictement supérieure audit seuil de hauteur, lesdits moyens d'adaptation sont désactivés.

La présente invention concerne, de plus, un aéronef qui comporte un dispositif du type de celui décrit ci-dessus.

Les figures du dessin annexé feront bien comprendre comment l'invention peut être réalisée. Sur ces figures, des références identiques désignent des éléments semblables.

La figure 1 est un schéma synoptique d'un dispositif conforme à la présente invention permettant d'éviter l'émission de certaines alertes par un système anticollision monté à bord d'un avion, lors d'une manoeuvre de changement d'altitude.

Les figures 2 et 3 représentent chacune un exemple d'une situation de rencontre éligible pour l'activation des moyens d'adaptation du dispositif de la figure 1, sous réserve de l'émission d'une alerte TA pour une hauteur de l'avion le séparant d'un niveau d'altitude de consigne au plus égale à un seuil de hauteur déterminé.

La figure 4 est un diagramme sur lequel sont représentées, d'une part, l'évolution du premier seuil d'alerte en fonction d'une altitude maximale déterminée et, d'autre part, une approximation linéaire de l'évolution dudit premier seuil d'alerte en fonction de ladite altitude maximale déterminée.

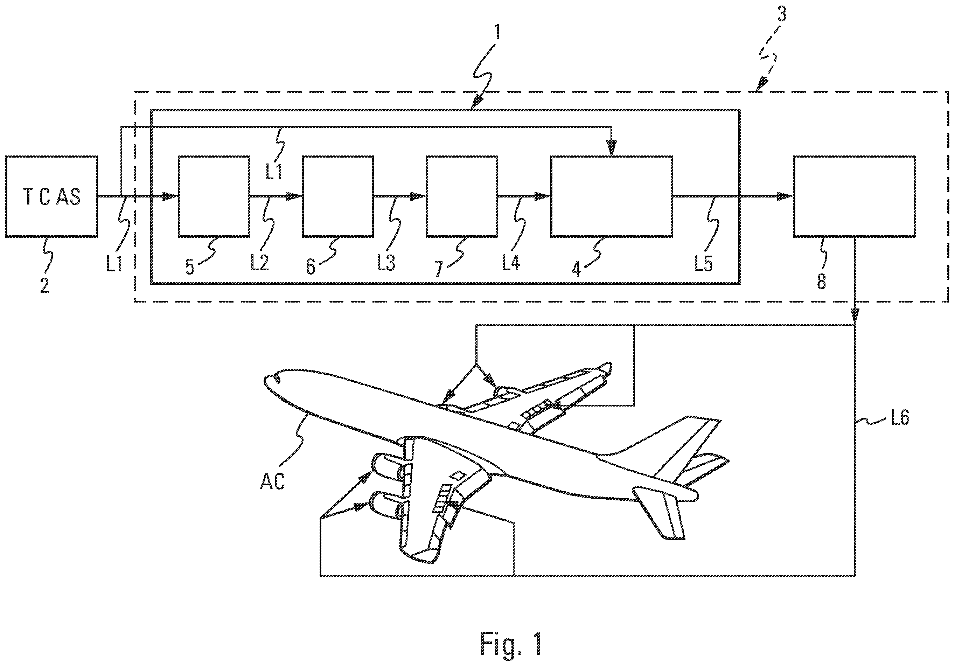

Sur la figure 1, on a représenté sous forme synoptique un dispositif 1, conforme à l'invention, embarqué à bord d'un avion AC. Un tel dispositif 1 est destiné à éviter l'émission de certaines alertes TA et/ou RA par un système anticollision TCAS 2 monté à bord de l'avion AC, lorsque ce dernier effectue une manoeuvre de changement d'altitude pour capturer un niveau de consigne Zc.

L'avion AC est en outre équipé d'un système de pilotage automatique 3 qui commande, notamment, la vitesse verticale Vz de celui-ci. Le système de pilotage automatique 3 peut comporter au moins certains des moyens 5 à 8 du dispositif 1 décrits par la suite.

Sur cette figure, le système anticollision 2 et le système de pilotage automatique 3 sont représentés à l'extérieur de l'avion AC, alors que, en réalité, ils sont montés à bord de ce dernier.

De façon connue, le système anticollision 2 est apte à détecter un aéronef intrus AI dans l'environnement aérien de l'avion AC, à calculer un temps de collision théorique dans le plan vertical entre celui-ci et ledit aéronef intrus AI et à émettre des alertes TA de premier type et des alertes RA de second type à l'attention de l'équipage de l'avion AC dans le cas où ledit temps de collision théorique est inférieur respectivement à un premier seuil et un second seuil d'alerte.

En outre, la manoeuvre de changement d'altitude est définie par les trois phases successives suivantes :

- une phase d'approche (montée ou descente), au cours de laquelle la trajectoire d'approche de l'avion AC est sensiblement rectiligne et est parcourue à une vitesse verticale Vz sensiblement constante jusqu'à une hauteur de capture hc séparant l'avion du niveau de consigne Zc à rejoindre ;
- une phase de capture d'altitude, qui débute lorsque la hauteur h de l'avion AC par rapport au niveau d'altitude de consigne Zc est au plus égale à la hauteur de capture hc (soit h≤hc). Au cours de la phase de capture, la trajectoire de l'avion AC est arrondie, par exemple parabolique, et vient tangenter le niveau de consigne Zc. La hauteur de

$$hc = \frac{Vz^2}{2g.|nz|}$$

capture hc est définie par la relation suivante : dans laquelle g est l'accélération gravitationnelle et nz est le facteur de charge vertical constant de l'avion AC ; et

- une phase de stabilisation, au cours de laquelle la trajectoire de l'avion AC suit ledit niveau de consigne Zc.

Selon l'invention, comme le montre la figure 1, le dispositif 1 comporte :

- des moyens 4 (par exemple du type de ceux décrits dans la demande de brevet français FR-08/05211 déposée le 23 septembre 2008 par la Demanderesse) aptes à adapter, par exemple automatiquement, une manoeuvre de changement d'altitude par un contrôle de la vitesse verticale Vz de l'avion AC et à prévenir l'émission d'alertes de collision TA et/ou RA en maintenant le temps de collision calculé dans le plan vertical, par le système anticollision 2, au-dessus des seuils d'alerte correspondants. Ces moyens 4 sont reliés au système anticollision 2 par une liaison L1 ;

- des moyens 5 pour détecter, lors d'une manoeuvre de changement d'altitude de l'avion AC, l'émission d'une alerte TA par le système anti-collision 2. Ces moyens 5 sont reliés au système anticollision 2 par la liaison L1 ;
- des moyens 6 pour déterminer la valeur du premier seuil d'alerte à partir de l'altitude Za de l'avion AC lors de l'émission d'une alerte TA de premier type et du niveau d'altitude de consigne Zc. Les moyens 6 sont aptes à recevoir des moyens de détection 5, par une liaison L2, une information d'émission d'une telle alerte TA;et
- des moyens 7 pour établir un seuil de hauteur d'activation ha à partir du premier seuil d'alerte déterminé par les moyens 6 et reçu par une liaison L3 et de la vitesse verticale dudit avion à l'instant de l'émission de ladite alerte de premier type, de sorte que :

   ■ lorsque la hauteur h séparant l'avion AC du niveau d'altitude de consigne Zc, à l'instant d'émission d'une alerte TA, est au plus égale au seuil de hauteur d'activation déterminé ha, les moyens d'adaptation 4 sont activés afin d'être apte à adapter la manoeuvre de changement d'altitude ; et
   ■ lorsque la hauteur h séparant l'avion AC du niveau d'altitude de consigne Zc, à l'instant d'émission de l'alerte TA, est strictement supérieure au seuil de hauteur ha, les moyens d'adaptation 4 sont désactivés. Aucune adaptation ne sera réalisée par les moyens 4.

Les moyens 7 sont aptes à transmettre, par une liaison L4, un ordre d'activation ou de désactivation des moyens 4.

Ainsi, grâce à l'invention, le dispositif 1 peut déterminer si, à partir de l'information d'émission d'une alerte TA, la situation en cours de rencontre de l'avion AC (effectuant une manoeuvre de changement d'altitude) et d'un aéronef intrus AI est éligible pour l'activation des moyens d'adaptation 4.

Le seuil de hauteur d'activation ha correspond donc à la distance maximale, séparant l'avion AC du niveau d'altitude de consigne Zc, à partir de laquelle les moyens d'adaptation 4 sont opérationnels et effectuent automatiquement une adaptation de la manoeuvre de changement d'altitude par un contrôle de la vitesse verticale Vz de l'avion AC, en cas d'émission d'une alerte TA.

Dans le cas où une alerte TA survient à une hauteur h séparant l'avion AC du niveau de consigne Zc strictement supérieure à ha (soit h>ha), les moyens d'adaptation 4 sont désactivés, de sorte qu'aucune adaptation de la manoeuvre n'est réalisée, y compris lors du franchissement du seuil de hauteur ha par l'avion AC (c'est-à-dire pour h≤ha) en l'absence d'émission d'une nouvelle alerte TA.

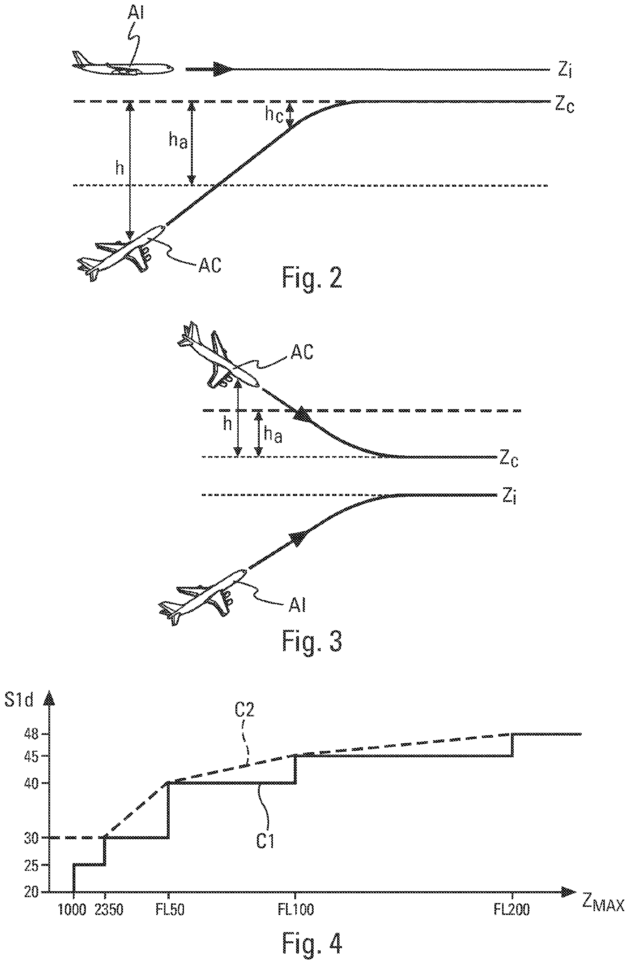

Sur la figure 2, on a représenté un premier exemple de situation de rencontre éligible pour l'activation des moyens 4, sous réserve de l'émission d'une alerte TA pour une hauteur h de l'avion AC au plus égale au seuil ha déterminé. Dans cet exemple, l'avion AC effectue une manoeuvre de changement d'altitude pour atteindre un niveau de consigne Zc supérieur, lorsqu'un aéronef intrus AI, volant à un niveau d'altitude Zi au-dessus de Zc, est identifié par le système anticollision 2.

Dans le second exemple de situation éligible de la figure 3, l'avion AC, qui effectue une manoeuvre de changement d'altitude pour atteindre un niveau d'altitude de consigne inférieur, est en descente, lorsque le système anticollision 2 détecte un aéronef intrus AI, effectuant également une manoeuvre de changement d'altitude pour atteindre un niveau d'altitude Zi au-dessous de Zc. L'activation des moyens 4 sera effectuée, sous réserve de l'émission d'une alerte TA pour une hauteur h de l'avion AC au plus égale au seuil ha déterminé.

Dans les deux exemples précités, une alerte TA est fortement susceptible d'être émise par le système anticollision 2 de l'avion AC au cours de la manoeuvre de changement d'altitude.

Selon l'invention, le seuil de hauteur d'activation ha, déterminé par les moyens 7, est défini par la relation :

$$ha = S1d.|Vz| + \frac{1}{2}g.|nz|.S1d^2 \qquad (R1)$$

dans laquelle :

- Vz est la vitesse verticale de l'avion AC à l'instant de l'émission d'une alerte TA ;
- g.|nz| est l'accélération verticale constante au cours de la phase de capture d'une manoeuvre de changement d'altitude ; et
- S1d est le premier seuil d'alerte déterminé par les moyens 6.

En effet, dans le plan vertical, le temps de collision $\tau$, déterminé par le système anticollision 2, est défini par la relation suivante :

$$\tau = \left| \frac{Zi - Z}{Vzi - Vz} \right|$$

dans laquelle :

- Z et Zi sont respectivement l'altitude de l'avion AC et celle de l'aéronef intrus AI ; et
- Vz et Vzi sont respectivement la vitesse verticale de l'avion AC et celle de l'aéronef AI.

Une alerte TA survient donc lorsque le temps de collision est égal au premier seuil d'alerte (fonction de l'altitude de l'avion AC ou de l'aéronef intrus AI le plus haut). On obtient les égalités suivantes :

$$S1 = \frac{h + hi}{|Vz| + |Vzi|}$$

$$\text{soit } h = S1.|Vz| + \left( S1.|Vzi| - hi \right) \quad (R2)$$

dans lesquelles :

- S1 est le premier seuil d'alerte ;
- hi est la hauteur verticale entre l'aéronef intrus AI et le niveau d'altitude de consigne à atteindre Zc.

Dans le cadre de la présente invention, le seuil de hauteur d'activation ha est une estimation de la hauteur maximale séparant l'avion AC du niveau de consigne Zc à partir duquel une alerte TA peut être émise, dans le cas où un aéronef intrus AI réalise une manoeuvre de changement d'altitude vers un niveau de vol au moins égal au niveau d'altitude de consigne Zc. L'alerte TA a lieu plus loin du niveau de consigne Zc lorsque l'aéronef intrus AI est plus près de ce dernier, avec une vitesse verticale maximale. Dans le cas d'une capture de niveau d'altitude par l'aéronef intrus AI, sa vitesse verticale est limitée à celle imposée lors de la phase de capture d'altitude, dont la hauteur de capture hc

$$hc = \frac{Vz^2}{2g.|nz|} \; .$$

est définie par

En remplaçant hi par hc dans la relation R2, on obtient un polynôme du second degré en fonction de Vzi que l'on peut majorer pour obtenir la hauteur maximale hmax, alors définie par :

$$h\max = S1.|Vz| + \frac{1}{2} g.|nz|.S1^2 \quad (R3)$$

Dans un mode de réalisation particulier de la présente invention, on considère que le système de pilotage automatique de l'avion AC ne fait, bien qu'il pourrait en être autrement, l'acquisition d'aucune information en provenance du système anticollision 2, excepté celle relative au déclenchement d'une alerte TA de premier type. Ainsi, le premier seuil d'alerte, qui dépend par définition de l'altitude de l'avion AC ou de l'aéronef intrus AI le plus haut, ne peut être déterminé dans certains cas, du fait que l'altitude de l'aéronef intrus AI n'est pas fournie au système de pilotage automatique 3. On peut citer, à titre d'exemple, le cas où l'aéronef intrus AI est au-dessus de l'avion AC.

Pour y remédier, dès réception d'une information d'émission d'une alerte TA par le système anticollision 2, les moyens 6 sont aptes :

- à déterminer l'altitude maximale entre l'altitude Za de l'avion AC, à l'instant de l'émission de l'alerte TA, et le niveau d'altitude de consigne Zc. En effet, comme l'altitude de l'avion AC ou de l'aéronef intrus AI le plus haut n'est pas connue par le système de pilotage automatique 3, on considère l'altitude maximale Zmax entre l'altitude Za de l'avion AC et le niveau d'altitude de consigne Zc. Si l'aéronef intrus AI est au-dessus de l'avion AC, il se situe à une altitude au moins égale au niveau d'altitude de consigne Zc. En revanche, si l'aéronef intrus AI est en-dessous de l'avion AC, l'altitude maximale Zmax est celle de l'avion AC ; et

- à associer au premier seuil d'alerte, en fonction de l'altitude maximale déterminée Zmax, une valeur de seuil d'alerte prédéfinie appartenant à un ensemble prédéfini de valeurs de seuil d'alerte, chacune desdites valeurs étant associée à une altitude donnée. Les valeurs de seuil d'alerte dudit ensemble sont par exemple sauvegardées dans une mémoire (non représentée sur les figures).

Parmi les valeurs dudit ensemble, figurent des valeurs de référence prédéterminées, associées à un niveau de vol prédéfini, et des valeurs approximées, obtenues par approximation linéaire des valeurs de référence.

Le tableau ci-après présente, à titre d'exemple illustratif et non limitatif, des valeurs de référence prédéterminées dudit ensemble associées à un niveau de vol donné.

| Niveau de vol (en pied) | Valeur de référence du premier seuil d'alerte TA (en seconde) |
|---|---|
| FL200 - FL420 | 48 |
| FL100 - FL200 | 45 |
| FL50 - FL100 | 40 |
| 2350pieds - FL50 | 30 |
| 1000 - 2350pieds | 25 |
| 0 - 1000pieds | 20 |

Sur le diagramme de la figure 4, on a représenté, par la courbe C1, l'évolution du premier seuil d'alerte en fonction de l'altitude maximale Zmax déterminé, à partir des valeurs du tableau précédent.

Sur cette même figure, la courbe C2 représente une approximation linéaire des valeurs du premier seuil d'alerte TA en fonction de l'altitude maximale Zmax, permettant d'obtenir une continuité des valeurs du premier seuil d'alerte TA.

Ainsi, en remplaçant dans l'égalité R2, la valeur S1d (correspondant à une valeur de référence ou estimée) du premier seuil d'altitude, déterminée par les moyens 6 pour l'altitude maximale Zmax obtenue, on aboutit au seuil de

$$ha = S1d.|Vz| + \frac{1}{2} g.|nz|.S1d^2 \ .$$

hauteur d'activation ha défini par la relation R1 précitée, à savoir

Lorsque les moyens 4 sont activés et réalisent une adaptation d'une manoeuvre de changement d'altitude, ils émettent, par une liaison L5, des ordres de vitesse verticale à l'attention d'un calculateur de vol 8 embarqué. Sur réception de ces ordres de vitesse, le calculateur 8 est apte à délivrer des ordres de commande correspondants qui sont par exemple transmis, par des liaisons L6, aux actionneurs des surfaces permettant le contrôle longitudinal de l'avion AC (gouvernes de profondeur, aérofreins) et/ou aux moteurs dudit avion, de manière à appliquer les ordres de vitesse verticale déterminés par les moyens 4.

## Revendications

**1.** Procédé pour empêcher l'émission d'au moins certaines alertes par un système anticollision (2) monté à bord d'un avion (AC) lors d'une manoeuvre de changement d'altitude comportant une phase de capture d'un niveau d'altitude de consigne (Zc), ledit système anticollision (2) étant apte à détecter au moins un aéronef intrus (AI) se trouvant dans l'environnement aérien dudit avion (AC), à calculer un temps de collision théorique entre ledit avion (AC) et ledit aéronef intrus (AI) et à émettre des alertes de premier type et des alertes de second type, lorsque ce temps de collision théorique est inférieur respectivement à un premier seuil et un second seuil,

ledit procédé étant susceptible de mettre en oeuvre une étape d'adaptation de ladite manoeuvre de changement d'altitude par un contrôle de la vitesse verticale dudit avion (AC) afin d'éviter l'émission d'au moins certaines desdites alertes,

**caractérisé en ce qu'**il comprend des étapes :

A/ de détection, préalablement, lors de ladite manoeuvre de changement d'altitude, de l'émission d'une alerte de premier type ;

B/ de détermination dudit premier seuil d'alerte (S1d) à partir de l'altitude dudit avion (AC) à l'instant de l'émission de ladite alerte de premier type et dudit niveau d'altitude de consigne (Zc) ; et

C/ d'établissement d'un seuil de hauteur d'activation (ha) à partir dudit premier seuil d'alerte déterminé (S1d) et de la vitesse verticale dudit avion à l'instant de l'émission de ladite alerte de premier type, de sorte que :

- lorsque la hauteur (h) séparant ledit avion (AC) dudit niveau d'altitude de consigne (Zc), à l'instant d'émission de ladite alerte de premier type, est au plus égale audit seuil de hauteur déterminé (ha), ladite étape d'adaptation est apte à être mise en oeuvre afin d'empêcher l'émission de nouvelles alertes ; et
- lorsque la hauteur (h) séparant ledit avion (AC) dudit niveau d'altitude de consigne (Zc), à l'instant d'émission de ladite alerte de premier type, est strictement supérieure audit seuil de hauteur (ha), ladite étape d'adaptation de la manoeuvre de changement d'altitude est inhibée.

**2.** Procédé selon la revendication 1,
**caractérisé en ce que** ledit seuil de hauteur d'activation (ha) est défini par la relation :

$$ha = S1d.|Vz| + \frac{1}{2} g.|nz|.S1d^2$$

dans laquelle :

- ha est ledit seuil de hauteur d'activation déterminé ;
- Vz est la vitesse verticale dudit avion (AC) à l'instant de l'émission de ladite alerte de premier type ;
- g.lnzl est l'accélération verticale constante au cours de ladite phase de capture ; et
- S1d est ledit premier seuil d'alerte déterminé lors de l'étape B/.

**3.** Procédé selon l'une des revendications 1 ou 2,
**caractérisé en ce que**, l'étape B/ comprend des opérations :

- de détermination de l'altitude maximale (Zmax) entre l'altitude dudit avion (AC) à l'instant de l'émission de ladite alerte de premier type et ledit niveau d'altitude de consigne (Zc), l'altitude maximale (Zmax) étant telle que si l'aéronef intrus (AI) est au-dessus de l'avion (AC), elle se situe à une altitude au moins égale au niveau d'altitude de consigne (Zc) et si l'aéronef intrus (AI) est en-dessous de l'avion (AC), l'altitude maximale (Zmax) est celle de l'avion (Ac); et
- d'association audit premier seuil d'alerte, en fonction de ladite altitude maximale déterminée (Zmax), d'une valeur de seuil d'alerte prédéfinie appartenant à un ensemble prédéfini de valeurs de seuil d'alerte, chacune desdites valeurs étant associée à une altitude donnée.

**4.** Procédé selon la revendication 3,
**caractérisé en ce que** ledit ensemble comporte des valeurs de référence prédéterminées et des valeurs approximées, obtenues par une approximation linéaire d'au moins certaines desdites valeurs de référence.

**5.** Dispositif pour empêcher l'émission d'au moins certaines alertes par un système anticollision (2) monté à bord d'un avion (AC) lors d'une manoeuvre de changement d'altitude comportant une phase de capture d'un niveau d'altitude de consigne (Zc), ledit système anticollision (2) étant apte à détecter au moins un aéronef intrus (AI) se trouvant dans l'environnement aérien dudit avion (AC), à calculer un temps de collision théorique entre ledit avion (AC) et ledit aéronef intrus (AI) et à émettre des alertes de premier type et des alertes de second type, lorsque ce temps de collision théorique est inférieur respectivement à un premier seuil et un second seuil,
ledit dispositif (1) comportant des moyens (4) aptes à adapter ladite manoeuvre de changement d'altitude par un contrôle de la vitesse verticale dudit avion (AC) afin d'éviter l'émission d'au moins certaines desdites alertes,
**caractérisé en ce que** ledit dispositif (1) comporte en outre :

- des moyens (5) pour détecter préalablement, lors de ladite manoeuvre de changement d'altitude, l'émission d'une alerte de premier type ;
- des moyens (6) pour déterminer ledit premier seuil d'alerte (S1d) à partir de l'altitude dudit avion à l'instant de l'émission de ladite alerte de premier type et dudit niveau d'altitude de consigne (Zc) ; et
- des moyens (7) pour établir un seuil de hauteur d'activation (ha) à partir dudit premier seuil d'alerte déterminé (S1d) et de la vitesse verticale dudit avion à l'instant de l'émission de ladite alerte de premier type, de sorte que :

- lorsque la hauteur (h) séparant ledit avion (AC) dudit niveau d'altitude de consigne (Zc), à l'instant d'émission de ladite alerte de premier type, est au plus égale audit seuil de hauteur déterminé (ha), lesdits moyens d'adaptation (4) sont activés afin d'être aptes à adapter ladite manoeuvre de changement d'altitude ; et

- lorsque la hauteur (h) séparant ledit avion (AC) dudit niveau d'altitude de consigne (Zc), à l'instant d'émission de ladite alerte de premier type, est strictement supérieure audit seuil de hauteur (ha), lesdits moyens d'adaptation (4) sont désactivés.

6. Aéronef,
   **caractérisé en ce qu'**il comporte un dispositif (1) tel que spécifié sous la revendication 5.


**Patentansprüche**

1. Verfahren, um die Ausgabe von mindestens gewissen Alarmen durch ein Antikollisionssystem (2), das an Bord eines Flugzeugs (AC) angebracht ist, bei einem Höhenänderungsmanöver, das eine Phase des Erfassens eines Sollhöhenniveaus (Zc) umfasst, zu vermeiden, wobei das Antikollisionssystem (2) mindestens ein eingedrungenes Flugzeug (AI), das sich im Luftraum des Flugzeugs (AC) befindet, erkennen, eine theoretische Kollisionszeit zwischen dem Flugzeug (AC) und dem eingedrungenen Flugzeug (AI) berechnen, und Alarme eines ersten Typs und Alarme eines zweiten Typs ausgeben kann, wenn diese theoretische Kollisionszeit kleiner ist als jeweils eine erste Schwelle und eine zweite Schwelle,
   wobei das Verfahren einen Schritt des Anpassens des Höhenänderungsmanövers über ein Steuern der vertikalen Geschwindigkeit des Flugzeugs (AC) umsetzen kann, um die Ausgabe von mindestens gewissen der Alarme zu vermeiden,
   **dadurch gekennzeichnet, dass** es Schritte umfasst:

   A/ des Erkennens, im Voraus, beim Höhenänderungsmanöver, der Ausgabe eines Alarms eines ersten Typs;
   B/ des Bestimmens der ersten Alarmschwelle (S1d) auf Grundlage der Höhe des Flugzeugs (AC) zum Zeitpunkt der Ausgabe des Alarms vom ersten Typ und des Sollhöhenniveaus (Zc); und
   C/ des Festlegens einer Aktivierungshöhenschwelle (ha) auf Grundlage der bestimmten ersten Alarmschwelle (S1d) und der vertikalen Geschwindigkeit des Flugzeugs zum Zeitpunkt der Ausgabe des Alarms vom ersten Typ so, dass:

   • wenn die Höhe (h), die das Flugzeug (AC) zum Zeitpunkt der Ausgabe des Alarms vom ersten Typ vom Sollhöhenniveau (Zc) trennt, höchstens gleich der bestimmten Höhenschwelle (ha) ist, der Anpassungsschritt umgesetzt werden kann, um die Ausgabe von neuen Alarmen zu vermeiden; und
   • wenn die Höhe (h), die das Flugzeug (AC) zum Zeitpunkt der Ausgabe des Alarms vom ersten Typ vom Sollhöhenniveau (Zc) trennt, strikt größer ist als die Höhenschwelle (ha), der Schritt zum Anpassen des Höhenänderungsmanövers gesperrt ist.

2. Verfahren nach Anspruch 1,
   **dadurch gekennzeichnet, dass** die Aktivierungshöhenschwelle (ha) durch die Beziehung definiert wird:

$$ha = S1d.|Vz| + \frac{1}{2}\, g.|nz|.S1d^2$$

   wobei:

   - ha die bestimmte Aktivierungshöhenschwelle ist;
   - Vz die vertikale Geschwindigkeit des Flugzeugs (AC) zum Zeitpunkt der Ausgabe des Alarms vom ersten Typ ist;
   - g.|nz| die konstante vertikale Beschleunigung während der Erfassungsphase ist; und
   - Sd1 die erste Alarmschwelle ist, die im Schritt B/ bestimmt wurde.

3. Verfahren nach einem der Ansprüche 1 oder 2,
   **dadurch gekennzeichnet, dass** der Schritt B/ Operationen umfasst:

   - des Bestimmens der maximalen Höhe (Zmax) zwischen der Höhe des Flugzeugs (AC) zum Zeitpunkt der Ausgabe des Alarms vom ersten Typ und dem Sollhöhenniveau (Zc), wobei die maximale Höhe (Zmax) derart ist, dass wenn sich das eingedrungene Flugzeug (AI) über dem Flugzeug (AC) befindet, sie auf einer Höhe liegt, die dem Sollhöhenniveau (Zc) mindestens gleich ist, und wenn sich das eingedrungene Flugzeug (AI) unter dem Flugzeug (AC) befindet, die maximale Höhe (Zmax) diejenige des Flugzeugs (Ac) ist; und

- des Verknüpfens, abhängig von der bestimmten maximalen Höhe (Zmax), eines zu einem Satz vordefinierter Alarmschwellenwerte gehörenden vordefinierten Alarmschwellenwerts mit der ersten Alarmschwelle, wobei jeder der Werte mit einer gegebenen Höhe verknüpft ist.

4. Verfahren nach Anspruch 3,
**dadurch gekennzeichnet, dass** der Satz vorbestimmte Referenzwerte und Näherungswerte umfasst, die durch eine lineare Näherung von mindestens gewissen der Referenzwerte erhalten werden.

5. Vorrichtung, um die Ausgabe von mindestens gewissen Alarmen durch ein Antikollisionssystem (2), das an Bord eines Flugzeugs (AC) angebracht ist, bei einem Höhenänderungsmanöver, das eine Phase des Erfassens eines Sollhöhenniveaus (Zc) umfasst, zu vermeiden, wobei das Antikollisionssystem (2) mindestens ein eingedrungenes Flugzeug (AI), das sich im Luftraum des Flugzeugs (AC) befindet, erkennen, eine theoretische Kollisionszeit zwischen dem Flugzeug (AC) und dem eingedrungenen Flugzeug (AI) berechnen, und Alarme eines ersten Typs und Alarme eines zweiten Typs ausgeben kann, wenn diese theoretische Kollisionszeit kleiner ist als jeweils eine erste Schwelle und eine zweite Schwelle,
wobei die Vorrichtung (1) Mittel (4) umfasst, die das Höhenänderungsmanöver über ein Steuern der vertikalen Geschwindigkeit des Flugzeugs (AC) anpassen können, um die Ausgabe von mindestens gewissen der Alarme zu vermeiden,
**dadurch gekennzeichnet, dass** die Vorrichtung (1) weiter umfasst:

- Mittel (5), um beim Höhenänderungsmanöver die Ausgabe eines Alarms eines ersten Typs im Voraus zu erkennen;
- Mittel (6), um die erste Alarmschwelle (S1d) auf Grundlage der Höhe des Flugzeugs zum Zeitpunkt der Ausgabe des Alarms vom ersten Typ und des Sollhöhenniveaus (Zc) zu bestimmen; und
- Mittel (7), um auf Grundlage der bestimmten ersten Alarmschwelle (S1d) und der vertikalen Geschwindigkeit des Flugzeugs zum Zeitpunkt der Ausgabe des Alarms vom ersten Typ eine Aktivierungshöhenschwelle (ha) so festzulegen, dass:

• wenn die Höhe (h), die das Flugzeug (AC) zum Zeitpunkt der Ausgabe des Alarms vom ersten Typ vom Sollhöhenniveau (Zc) trennt, höchstens gleich der bestimmten Höhenschwelle (ha) ist, die Anpassungsmittel (4) aktiviert werden, um das Höhenänderungsmanöver anpassen zu können; und
• wenn die Höhe (h), die das Flugzeug (AC) zum Zeitpunkt der Ausgabe des Alarms vom ersten Typ vom Sollhöhenniveau (Zc) trennt, strikt größer ist als die Höhenschwelle (ha), die Anpassungsmittel (4) deaktiviert werden.

6. Flugzeug,
**dadurch gekennzeichnet, dass** es eine Vorrichtung (1) wie in Anspruch 5 spezifiziert umfasst.

**Claims**

1. A method for preventing at least some alarms to be emitted by an anti-collision system on board (2) an airplane (AC) during an altitude capture maneuver comprising a phase for capturing an altitude set level (Zc), said anti-collision system (2) being able to detect at least one intrusive aircraft (AI) being located in the air environment of said airplane (AC), to calculate a theoretical collision time between said airplane (AC) and said intrusive aircraft (AI) and to emit alarms of the first type and alarms of the second type, when such a theoretical collision time is lower respectively than a first threshold and a second threshold,
said method being able to implement a step of adaptation of said altitude capture maneuver by a control of the vertical speed of said airplane (AC) so as to prevent at least some of said alarms from being emitted, **characterized in that** it includes steps:

A/ for detecting first the emission of an alarm of the first type during said altitude capture maneuver;
B/ for determining said first alarm threshold (S1d) from the altitude of said airplane (AC) at the time of the emission of said alarm of the first type and of said level of the reference altitude (Zc) ; and
C/ for establishing an activation height threshold (ha) from said first determined alarm threshold (S1d) and from the vertical speed of said airplane at the time of the emission of said alarm of the first type, so that:

▪ when the height (h) separating said airplane (AC) from said altitude set level (Zc), at time of the emission of said alarm of the first type, is at the most equal to said determined height threshold (ha), said adaptation step is able to be implemented so as to prevent new alarms from being emitted; and

▪ when the height (h) separating said airplane (AC) from said altitude set level (Zc), at the time of the emission of said alarm of the first type, is strictly higher than said height threshold (ha), said adaptation step of the altitude capture maneuver is inhibited.

2. The method according to claim 1,
**characterized in that** said activation height threshold (ha) is defined by the equation:

$$ha = S1d.|Vz| + \frac{1}{2}g.|nz|.S1d^2$$

wherein:

- ha is said determined activation height threshold;
- Vz is the vertical speed of said airplane (AC) at the time of the emission of said alarm of the first type;
- g.lnzl is the constant vertical acceleration during said capture phase; and
- S1d is said alarm threshold determined in step B/.

3. A method according to one of claims 1 and 2,
**characterized in that** step B/: includes operations :

- for determining the maximum altitude (Zmax) between the altitude of said airplane (AC) at the time of the emission of said alarm of the first type and said altitude set level (Zc), the maximum altitude (Zmax) being such that if the intrusive aircraft (AI) is above the airplane (AC), it is located at an altitude at least equal to the altitude set level (Zc) and if the intrusive aircraft (AI) is under the airplane (AC), the maximum altitude (Zmax) is that of the airplane (AC); and
- for associating to said first alarm threshold, as a function of said determined maximum altitude (Zmax), a predefined value of the alarm threshold belonging to a predefined set of values of alarm threshold, each one of said values being associated with a given altitude.

4. A method according to claim 3,
**characterized in that** said set comprises predetermined values of reference and approximate values, obtained through a linear approximation of at least some of said values of reference.

5. A device for preventing at least some alarms from being emitted by an anti-collision system on board (2) an airplane (AC) during an altitude capture maneuver comprising a phase for capturing an altitude set level (Zc), said anti-collision system being able to detect at least one intrusive aircraft (AI) being located in the air environment of said airplane (AC), to calculate a theoretical collision time between said airplane (AC) and said intrusive aircraft (AI) and to emit alarms of the first type and alarms of the second type, when such a theoretical collision time is lower respectively than a first threshold and a second threshold,
said device (1) comprising means (4) able to adapt said altitude capture maneuver by a control of the vertical speed of said airplane (AC) so as to prevent at least some of said alarms from being emitted,
**characterized in that** said device (1) further comprises:

- means (5) for first detecting, during said altitude capture maneuver, the emission of an alarm of the first type;
- means (6) for determining said first alarm threshold (S1d) from the altitude of said airplane at the time of the emission of said alarm of the first type and of said altitude set level (Zc); and
- means (7) for establishing an activation height threshold (ha) from said first determined alarm threshold (S1d) and from the vertical speed of said airplane at the time of the emission of said alarm of the first type, so that:

▪ when the height (h) separating said airplane (AC) from said altitude set level (Zc), at the time of the emission of said alarm of the first type, is at the most equal to said determined height threshold (ha), said adaptation means (4) are activated so as to be able to adapt said altitude capture maneuver; and

▪ when the height (h) separating said airplane (AC) from said altitude set level (Zc), at the time of the emission of said alarm of the first type, is strictly higher than said height threshold (ha), said adaptation means (4) are disabled.

6. An aircraft,

**characterized in that** it comprises a device (1) such as specified in claim 5.

Fig. 1

Fig. 2

Fig. 3

Fig. 4

## RÉFÉRENCES CITÉES DANS LA DESCRIPTION

**Documents brevets cités dans la description**

- FR 2936343
- FR 0805211